# EUROPÄISCHE PATENTSCHRIFT

(11) **EP 2 360 081 B1**
(45) Veröffentlichungstag und Bekanntmachung des Hinweises auf die Patenterteilung: **11.04.2018**
(21) Anmeldenummer: 11000847.1
(22) Anmeldetag: 03.02.2011
(51) Int. Cl.: B62D 25/08

(54) **Fahrzeugkarosserieaufbau im Bereich zwischen Federbeinaufnahmen und Scheibenquerträger sowie zugeordnetes Fertigungsverfahren**
Vehicle body structure in the area between suspension strut mount and windshield cross beam and associated manufacturing process
Structure de carrosserie de véhicule dans la zone entre les éléments de réception de jambe de suspension et le support transversal de vitre ainsi que procédé de fabrication associé

(30) Priorität: 15.02.2010 DE 102010007995
(43) Veröffentlichungstag der Anmeldung: 24.08.2011
(73) Patentinhaber: Audi AG, 85045 Ingolstadt (DE)
(72) Erfinder: Urban, Tobias, 74354 Besigheim-Ottmarsheim (DE); Kühl, Sönke, 69120 Heidelberg (DE); Neufeldt, Christian, 74177 Bad Friedrichshall (DE); Holl, Werner, 74196 Neuenstadt (DE)
(74) Vertreter: Engelhardt, Harald

(56) Entgegenhaltungen:
- DE-A1- 19 928 588
- DE-A1-102005 050 951
- DE-A1-102008 033 853
- DE-A1-102008 036 236
- JP-A- 2009 023 618
- US-B2- 7 055 837

## Beschreibung

Die Erfindung betrifft einen Fahrzeugkarosserieaufbau im Bereich zwischen zwei vorderen Federbeinaufnahmen und einem vorderen Scheibenquerträger nach dem Oberbegriff des Anspruchs 1 sowie ein zugeordnetes Fertigungsverfahren nach dem Oberbegriff des Anspruchs 9.
Zur Verbesserung der Fahrzeugsteifigkeit im Frontwagenbereich und des Crashverhaltens sind in zahlreichen Fahrzeugkarosserien sogenannte Domstreben verwendet, mit denen der Dombereich der Federbeinaufnahmen untereinander und/oder gegenüber anderen Karosseriestrukturen abgestützt ist. Dabei ist es allgemein bekannt, die Federbeinaufnahmen unmittelbar mit einer Querstrebe untereinander zu verbinden und abzustützen. Alternativ dazu ist es allgemein bekannt, eine solche Querstrebe noch zusätzlich mit weiteren Streben mit dem vorderen Scheibenquerträger zu verbinden.
Zudem ist ein gattungsgemäßer Fahrzeugkarosserieaufbau mit zwei geradlinigen Domstreben bekannt, die einerseits jeweils im Dombereich der zugeordneten Federbeinaufnahme und andererseits jeweils an einer gemeinsamen Anbindungszelle oder an zwei nur wenig versetzten Anbindungsstellen im Mittenbereich des Scheibenquerträgers verbunden sind, siehe zum Beispiel DE 10 2008 033 853 A1 oder JP2009023618. Konkret sind dazu Ausführungen von Domstreben in Profilbauweise mit einer Abstützung zum Scheibenquerträger in unterschiedlichen Ausführungen bekannt:

Bei einer bekannten Anbindung der Domstreben mit überlappenden Domstrebenenden an einem gemeinsamen Anbindungspunkt am Scheibenquerträger von oben her (in Z-Richtung) ist nachteilig eine Lasche am Scheibenquerträger erforderlich und der Profilquerschnitt geht verloren. Insgesamt kann dadurch die Abstützfunktion reduziert sein. Ähnliches ergibt sich bei einer weiter bekannten Ausführungsform mit einem domstrebenseitig angeformten Anschlussteil, welches von vorne (in X-Richtung) am Scheibenquerträger angeschlossen werden kann.

Domstreben sind normalerweise als Montagelösungen für einen nachträglichen, vorzugsweise lösbaren Einbau ausgeführt, um die Zugänglichkeit zu weiteren Anbauteilen zu gewährleisten. Die vorstehenden allgemein bekannten Aufbauausführungen sind auch hinsichtlich der Montage relativ aufwändig.

Aufgabe der Erfindung ist es daher einen gattungsgemäßen Fahrzeugkarosserieaufbau im Bereich zwischen zwei vorderen Federbeinaufnahmen und einem vorderen Scheibenquerträger mit zwei geradlinigen Domstreben so weiterzubilden, dass bei geringeren Herstellungs- und Montagekosten eine gute Abstützfunktion, insbesondere in Verbindung mit einer gewichtsgünstigen Leichtbauweise erzielt wird.

Diese Aufgabe wird dadurch gelöst, dass die Anbindungsstelle im Mittenbereich des Scheibenquerträgers durch ein Steckteil gebildet ist, welches mit einer Anlagewand am Scheibenquerträger anliegt und dort befestigt ist. Dieses Steckteil weist zudem zwei im Winkel und in Richtung der beiden Domstreben ausgerichtete Steckaufnahmen für eine Halterung und Abstützung der zugeordneten Enden der Domstreben auf.

Durch die Verwendung eines separaten Steckteils zusätzlich zu den Domstreben kann eine insbesondere den Festigungsanforderungen und dem Leichtbau angepasste Kombination aus Steckteil und Domstreben eingesetzt werden, wobei unterschiedliche Herstellungsmethoden und unterschiedliche Herstellungsmaterialien für eine hinsichtlich Stabilität und Leichtbau optimierte Ausführung verwendet werden können. Die Befestigung des Steckteils kann über eine Anlageverbindung sehr stabil erfolgen und die Steckaufnahmen am Steckteil sind ebenfalls für eine Abstützung mit hoher Stabilität und großer Momentenaufnahme geeignet. Die Herstellung der Steckverbindung zwischen den Domstreben und dem Steckteil erfordert nur einen sehr geringen Montageaufwand.

Eine besonders gute Abstützfunktion mit wenig Platzbedarf wird erreicht, wenn die beiden Domstreben auf einen gemeinsamen Abstützpunkt in Richtung Scheibenquerträger ausgerichtet sind.

Die Verbindung zwischen dem Steckteil und dem Scheibenquerträger wird vorteilhaft in Fahrzeuglängsrichtung (X-Richtung) durch die Anlagewand hindurch ausgeführt. Die Anbindungsstelle selbst ist mit relativ wenig belastet und kann insbesondere lösbar als Schraubverbindung ausgeführt sein. Eine geeignete Anlagegegenwand des Scheibenquerträgers liegt im Anbindungsbereich üblicherweise vor.

In einer Weiterbildung wird vorgeschlagen, dass von der Anlagewand des Steckteils in deren mittlerem Bereich ein Rohrfortsatz in Fahrzeugfrontrichtung abragt, der eine Bohrung für die Schraubverbindung aufweist und der jeweils zu beiden Seiten in einer entsprechend geformten Aussparung der beiden Domstrebenenden einliegt und damit einen Teil der Steckaufnahme bildet. Dieser Rohrfortsatz trägt somit für eine erhöhte Stabilität in den Einsteckbereichen ebenso bei wie für eine verbesserte Zugänglichkeit zur Anbringung der Schraubverbindung.

Bei einer vorteilhaften konkreten Ausführungsform weist das Steckteil von oben gesehen die Form eines gleichschenkligen Trapezes auf. An der kürzeren der beiden parallelen Trapezseiten ist die etwa vertikal und in Fahrzeugquerrichtung liegende Anlagewand ausgebildet. An den beiden gleichschenkligen Trapezseiten sind vertikal ausgerichtete, die beiden Domstrebenenden von der Außenseite her abstützende Seitenstützwände ausgebildet. Weiter sind die Anlagewand sowie die Seitenstützwände im oberen und unteren Wandbereich mit einer die beiden Domstrebenenden zumindest teilweise übergreifenden Oberwand und Unterwand verbunden. Dadurch wird ein nach vorne offenes Steckteil ausgebildet, welches für die Abstützung auftretender Momente bei insgesamt wenig Fertigungsaufwand und wenig Materialeinsatz gut geeignet ist.

Weiter kann dabei die Unterwand trapezförmig ausgebildet sein, wobei deren Vorderkante der längeren der beiden parallelen Trapezseiten der von oben gesehenen Steckteilform entspricht. Die erforderliche Stabilität wird gegebenenfalls auch dann erreicht, wenn die Oberwand demgegenüber verkleinert und verkürzt ist und lediglich als die Domstrebenenden übergreifender Stützsteg ausgeführt ist. Damit wird weiter Material und Gewicht am Steckteil eingespart.

Ein besonders einfacher stabiler kostengünstiger und gewichtsgünstiger Aufbau ergibt sich dann wenn die Domstreben als geschlossene Rohrprofile, insbesondere Rundrohrprofile aus einem Leichtbauwerkstoff, vorzugsweise aus Aluminium gebildet sind und das Steckteil als Gussteil oder Profilteil oder als Blechteil ausgeführt ist, wobei auch für das Steckteil gegebenenfalls ein Leichtbauwerkstoff verwendet werden kann.

Die Anbindung der Domstrebenenden an der jeweiligen Federbeinaufnahme wird in Verbindung mit der Steckverbindung am Steckteil zweckmäßig von oben (in Z-Richtung) lösbar mit seiner Schraubverbindung hergestellt.

Bezüglich des Fertigungsverfahrens wird die Aufgabe dadurch gelöst, dass in einem ersten Schritt das Steckteil vorzugsweise durch Anschrauben, gegebenenfalls aber auch durch andere Fügeverfahren am Scheibenquerträger befestigt wird. In einem zweiten Schritt werden dann die beiden Domstreben mit den entsprechend geformten Domstrebenenden in das Steckteil eingesteckt und zu den Anbindungsstellen an den Federbeinaufnahmen ausgerichtet. Anschließend wird in einem weiteren Schritt die Verbindung der anderen Domstrebenenden mit den Federbeinaufnahmen vorzugsweise mittels Verschraubungen hergestellt. Die Montage ist ersichtlich einfach und schnell durchzuführen. Bei Bedarf sind die Domstreben auch wieder einfach und schnell zu demontieren.

Anhand einer Zeichnung wird die Erfindung weiter erläutert.

Es zeigen:
- Fig. 1: eine perspektivische Schemaansicht des Vorderteils einer Fahrzeugkarosserie im Bereich zwischen zwei vorderen Federbeinaufnahmen und einem vorderen Scheibenquerträger.
- Fig. 2: eine vergrößerte Darstellung des Bereichs A aus Fig. 1.

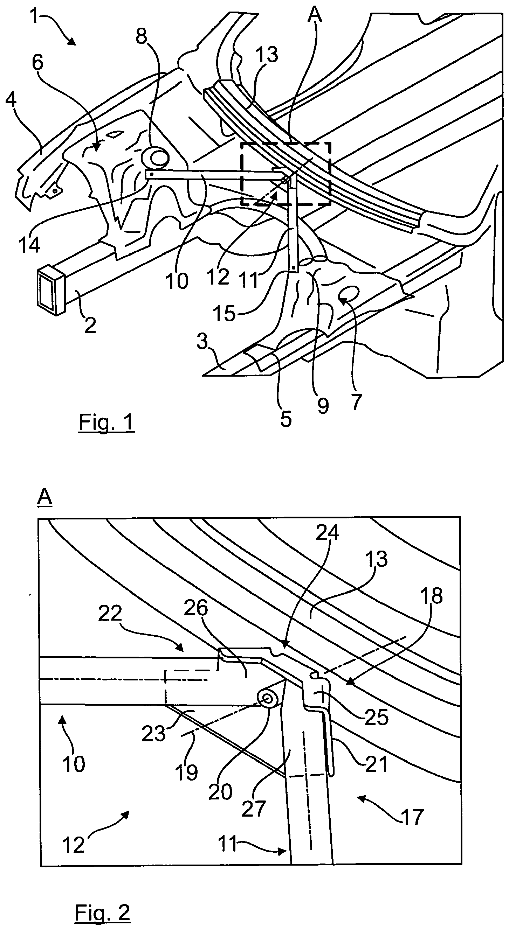

In Fig. 1 ist in einer schematischen Darstellung der Vorderwagenbereich einer Fahrzeugkarosserie 1 gezeigt mit zwei vorderen Längsträgern 2, 3 und zwei Kotflügelbänken 4, 5, zwischen denen jeweils gegenüberliegend in einem üblichen Aufbau eine Federbeinaufnahme 6, 7 mit einem Dombereich 8, 9 angeordnet ist.

Zur Stabilisierung sind zwei geradlinige Domstreben 10, 11 verwendet, die jeweils einerseits im Dombereich 8, 9 der zugeordneten Federbeinaufnahme 6, 7 und andererseits jeweils an einer gemeinsamen Anbindungsstelle 12 eines Scheibenquerträgers 13 verbunden sind. Die Anbindung der federbeinseitigen Domstrebenenden an den Federbeinaufnahmen 6, 7 erfolgt im Wesentlichen von oben (Z-Richtung) lösbar mittels Schraubverbindungen 14, 15.

Der Bereich der Anbindungsstelle 12 ist in Fig. 1 mit A bezeichnet und in Fig. 2 mit weiteren Einzelheiten vergrößert dargestellt:

Daraus ist ersichtlich, dass die Anbindungsstelle 12 am Scheibenquerträger 13 durch ein Steckteil 17 gebildet ist, welches von oben gesehen die Form eines gleichschenkligen Trapezes aufweist. An der kürzeren der beiden parallelen Trapezseiten ist eine etwa vertikal und in Fahrzeugquerrichtung liegende Anlagewand 18 ausgebildet, mit der das Steckteil 17 an einer entsprechend etwa vertikal liegenden Gegenfläche des Scheibenquerträgers 13 anliegt und dort verschraubt (schematisch durch strichlierte Linien 19 dargestellt) ist. Dazu ragt von der Anlagewand 18 in deren mittlerem Bereich ein Rohrfortsatz 20 in Fahrzeugfrontrichtung ab, der eine Bohrung für eine Schraubverbindung aufweist.

An den beiden gleichschenkligen Trapezseiten sind vertikal ausgerichtete Stützwände 21, 22 ausgebildet, welche in einem Trapezwinkel entsprechend der winkligen Anstellung der Domstreben 10, 11 zueinander ausgerichtet sind.

Die Anlagewand 18 sowie die Seitenstützwände 21, 22 sind im unteren Randbereich mit einer trapezförmig ausgebildeten Unterwand 23 verbunden, während eine entsprechende Oberwand 24 gegenüber der Unterwand 23 verkleinert und verkürzt lediglich als Stützsteg 25 ausgeführt ist.

Die Domstreben 10, 11 sind mit steckteilseitigen Domstrebenenden 26, 27 in das Steckteil 17 dergestalt eingesteckt, dass durch die Unterwand 23 und den Stützsteg 25 sowie die Seitenstützwände 21, 22 und den Rohrfortsatz 20 jeweils Steckaufnahmen für eine formschlüssige Steckverbindung der Domstrebenenden 26, 27 im Steckteil 17 gebildet sind, wobei die Domstrebenenden 26, 27 im Bereich des Rohrfortsatzes 20 eine diesem angepasste jeweils zusätzliche Ausnehmung aufweisen. Dabei weisen die Domstreben 10, 11 bzw. ihre Domstrebenenden 26, 27 auf einen gemeinsamen Abstützpunkt in Richtung des Scheibenquerträgers 13 hin.

Die Domstreben 10, 11 sind in diesem Ausführungsbeispiel als Rundrohrprofile aus Aluminium hergestellt. Das Steckteil 17 kann je nach den Anforderungen und Gegebenheiten als Gussteil, Profilteil oder Blechteil, vorzugsweise ebenfalls aus einem Leichtbauwerkstoff hergestellt sein.

## Patentansprüche

1. Fahrzeugkarosserieaufbau im Bereich zwischen zwei vorderen Federbeinaufnahmen (6, 7) und einem vorderen Scheibenquerträger (13) mit zwei geradlinigen Domstreben (10, 11), die einerseits jeweils im Dombereich (8, 9) der zugeordneten Federbeinaufnahme (6, 7) und andererseits jeweils an einer gemeinsamen Anbindungsstelle (12) im Mittenbereich des Scheibenquerträgers (13) verbunden sind,
**dadurch gekennzeichnet,**
**dass** die Anbindungsstelle (12) im Mittenbereich des Scheibenquerträgers (13) durch ein Steckteil (17) gebildet ist,
**dass** das Steckteil (17) mit einer Anlagewand (18) am Scheibenquerträger (13) anliegt und dort befestigt ist, und
**dass** das Steckteil (17) zudem zwei im Winkel und in Richtung der beiden Domstreben (10, 11) ausgerichtete Steckaufnahmen (21, 22, 20, 23, 24) aufweist, in die die Domstrebenenden (26, 27) für eine Halterung und Abstützung derselben eingesteckt sind.

2. Fahrzeugkarosserieaufbau nach Anspruch 1, **dadurch gekennzeichnet,**
**dass** die Domstreben auf einen gemeinsamen Abstützpunkt in Richtung Scheibenquerträger ausgerichtet sind.

3. Fahrzeugkarosserieaufbau nach Anspruch 1 oder 2, **dadurch gekennzeichnet, dass** das Steckteil (17) lösbar mit dem Scheibenquerträger (13) verbunden ist und die lösbare Verbindung als Schraubverbindung (19) in Fahrzeuglängsrichtung (X-Richtung) ausgeführt ist.

4. Fahrzeugkarosserieaufbau nach Anspruch 2, **dadurch gekennzeichnet,**
**dass** von der Anlagewand (18) in deren mittleren Bereich ein Rohrfortsatz (20) in Fahrzeugfrontrichtung abragt, der eine Bohrung für die Schraubverbindung (19) aufweist und der jeweils zu beiden Seiten in einer entsprechend geformten Aussparung der beiden Domstrebenenden (26, 27) einliegt und damit einen Teil der Steckaufnahmen bildet.

5. Fahrzeugkarosserieaufbau nach einem der Ansprüche 1 bis 4, **dadurch gekennzeichnet, dass** das Steckteil (17) von oben gesehen die Form eines gleichschenkligen Trapezes aufweist,
dass an der kürzeren der beiden parallelen Trapezseiten die etwa vertikal und in Fahrzeugquerrichtung liegende Anlagewand (18) ausgebildet ist,
dass an den beiden gleichschenkligen Trapezseiten vertikal ausgerichtete, die beiden Domstrebenenden (26, 27) von der Außenseite her abstützende Seitenstützwände (21, 22) ausgebildet sind, und
dass die Anlagewand (18) sowie die Seitenstützwände (21, 22) im oberen und unteren Randbereich mit einer die beiden Domstrebenenden (26, 27) zumindest teilweise übergreifenden Oberwand (24) und Unterwand (23) verbunden sind, so dass ein nach vorne offenes Steckteil (17) ausgebildet ist.

6. Fahrzeugkarosserieaufbau nach Anspruch 4, **dadurch gekennzeichnet,**
**dass** die Unterwand (23) trapezförmig ausgebildet ist und deren Vorderkante der längeren der beiden parallelen Trapezseiten der von oben gesehenen Steckteilform entspricht, und
**dass** die Oberwand (24) demgegenüber verkleinert und verkürzt ist und lediglich als ein die Domstrebenenden (26, 27) übergreifender Stützsteg (25) ausgebildet ist.

7. Fahrzeugkarosserieaufbau nach einem der Ansprüche 1 bis 6, **dadurch gekennzeichnet, dass** die Domstreben (10, 11) als geschlossene Rohrprofile, insbesondere Rundrohrprofile aus einem Leichtbauwerkstoff, vorzugsweise aus Aluminium gebildet sind, und
dass das Steckteil (17) als Gussteil oder als Profilteil oder als Blechteil ausgeführt ist.

8. Fahrzeugkarosserieaufbau nach einem der Ansprüche 1 bis 7, **dadurch gekennzeichnet, dass** die Anbindung der Domstrebenenden (26, 27) an der jeweiligen Federbeinaufnahme (6, 7) von oben (in Z-Richtung) lösbar mittels einer Schraubverbindung (14, 15) ausgeführt ist.

## Claims

1. Vehicle body structure in the region between two front spring strut mounts (6, 7) and a front windscreen crossmember (13), comprising two straight strut braces (10, 11) which at one end are respectively connected in the dome region (8, 9) of the associated spring strut mount (6, 7) and at the other end are respectively connected to a common connecting point (12) in the centre region of the windscreen crossmember (13),
**characterised in that**
the connecting point (12) is formed by an insertion part (17) in the centre region of the windscreen crossmember (13),
the insertion part (17) rests against the windscreen crossmember (13) by a contact wall (18) and is fastened there, and
the insertion part (17) also has two insertion mounts (21, 22, 20, 23, 24) which are oriented at an angle and in the direction of the two strut braces (10, 11) and into which the ends (26, 27) of the strut braces are inserted for the retention and support thereof.

2. Vehicle body structure according to claim 1, **characterised in that** the strut braces are oriented on a common supporting point in the direction of the windscreen crossmember.

3. Vehicle body structure according to claim 1 or 2, **characterised in that** the insertion part (17) is releasably connected to the windscreen crossmember (13) and the releasable connection is configured as a screw connection (19) in the longitudinal direction (X direction) of the vehicle.

4. Vehicle body structure according to claim 2, **characterised in that** protruding in the front direction of the vehicle from the contact wall (18) in the centre region thereof is a tubular extension (20) which has a hole for the screw connection (19) and which is respectively positioned on both sides in an appropriately formed opening in the two strut brace ends (26, 27) and thereby forms part of the insertion mounts.

5. Vehicle body structure according to any one of claims 1 to 4, **characterised in that** seen from above, the insertion part (17) has the shape of an isosceles trapezium,
the contact wall (18) which is positioned approximately vertically and in the transverse direction of the vehicle is formed on the shorter of the two parallel sides of the trapezium, vertically oriented side supporting walls (21, 22) which support the two strut brace ends (26, 27) from the outside are formed on the two equilateral sides of the trapezium, and the contact wall (18) and the side supporting walls (21, 22) are connected in the upper and lower peripheral region to an upper wall (24) and to a lower wall (23) which at least partly overlap the two strut brace ends (26, 27), so that a forwardly open insertion part (17) is formed.

6. Vehicle body structure according to claim 4, **characterised in that**
the lower wall (23) is formed in the shape of a trapezium and the leading edge thereof corresponds to the longer of the two parallel trapezium sides of the shape of the insertion part seen from above, and
the upper wall (24) is smaller and shorter in comparison therewith and is configured merely as a supporting web (25) overlapping the strut brace ends (26, 27).

7. Vehicle body structure according to any one of claims 1 to 6, **characterised in that** the strut braces (10, 11) are formed as closed tubular profiles, in particular as round tubular profiles, consisting of a lightweight material, preferably aluminium, and
the insertion part (17) is formed as a cast part or as a profile part or as a sheet metal part.

8. Vehicle body structure according to any one of claims 1 to 7, **characterised in that** the strut brace ends (26, 27) are releasably attached to the respective spring strut mount (6, 7) from above (in the Z direction) by means of a screw connection (14, 15).

## Revendications

1. Structure de carrosserie de véhicule dans la zone entre deux logements de jambe de force (6, 7) avant et une traverse de pare-brise avant (13) avec deux barres de dôme (10, 11) rectilignes qui sont raccordées d'une part respectivement dans la zone de dôme (8, 9) du logement de jambe de force (6, 7) associé et d'autre part respectivement au niveau d'un point de raccordement (12) commun dans la zone médiane de la traverse de pare-brise (13),
**caractérisée en ce que,**
le point de raccordement (12) est formé dans la zone médiane de la traverse de pare-brise (13) par une partie d'enfichage (17),
la partie d'enfichage (17) repose avec une paroi d'installation (18) contre la traverse de pare-brise (13) et y est fixée, et
la partie d'enfichage (17) présente de plus deux logements d'enfichage (21, 22, 20, 23, 24) orientés en angle et en direction des deux barres de dôme (10, 11), dans lesquels les extrémités de barres de dôme (26, 27) sont enfichées pour un support et un appui de celles-ci.

2. Structure de carrosserie de véhicule selon la revendication 1, **caractérisée en ce que** les barres de dôme sont orientées sur un point d'appui commun en direction de la traverse de pare-brise.

3. Structure de carrosserie de véhicule selon la revendication 1 ou 2, **caractérisée en ce que** la partie d'enfichage (17) est raccordée de manière détachable à la traverse de pare-brise (13) et le raccordement détachable est réalisé comme liaison de vissage (19) dans le sens longitudinal de véhicule (sens X).

4. Structure de carrosserie de véhicule selon la revendication 2, **caractérisée en ce qu**'un prolongement tubulaire (20) dépasse dans le sens avant de véhicule de la paroi d'installation (18) dans sa zone médiane, lequel présente un perçage pour la liaison de vissage (19) et lequel est logé respectivement des deux côtés dans un évidement formé de manière correspondante des deux extrémités de barre de dôme (26, 27) et forme ainsi une partie des logements d'enfichage.

5. Structure de carrosserie de véhicule selon l'une quelconque des revendications 1 à 4, **caractérisée en ce que** la partie d'enfichage (17) présente vue de dessus la forme d'un trapèze isocèle,
la paroi d'installation (18) se trouvant à peu près verticalement et dans le sens transversal de véhicule est réalisée au niveau du plus court des deux côtés de trapèze parallèle,
des parois d'appui latéral (21, 22) soutenant les deux extrémités de barres de dôme (26, 27) depuis le côté extérieur, orientées verticalement sont réalisées au niveau des deux côtés de trapèze isocèle, et
la paroi d'installation (18) ainsi que les parois d'appui latéral (21, 22) sont raccordées dans la zone de bord supérieure et inférieure avec une paroi supérieure (24) et paroi inférieure (23) recouvrant au moins partiellement les deux extrémités de barre de dôme (26, 27) de sorte qu'une partie d'enfichage (17) ouverte vers l'avant est réalisée.

6. Structure de carrosserie de véhicule selon la revendication 4, **caractérisée en ce que**
la paroi inférieure (23) est réalisée en forme de trapèze et son arête avant du côté le plus long des deux côtés de trapèze parallèle correspond à la forme de partie d'enfichage vue depuis le dessus, et
la paroi supérieure (24) est diminuée et raccourcie en conséquence et est réalisée juste comme une nervure d'appui (25) recouvrant les extrémités de barre de dôme (26, 27).

7. Structure de carrosserie de véhicule selon l'une quelconque des revendications 1 à 6, **caractérisée en ce que** les barres de dôme (10,11) sont formées comme des profilés tubulaires fermés, en particulier profilés tubulaires ronds en un matériau léger, de préférence en aluminium, et
la partie d'enfichage (17) est réalisée comme partie coulée ou comme partie profilée ou comme partie de tôle.

8. Structure de carrosserie de véhicule selon l'une quelconque des revendications 1 à 7, **caractérisée en ce que**
le raccordement des extrémités de barre de dôme (26, 27) au logement de jambe de force (6, 7) respectif est réalisé par le dessus (dans le sens z) de manière détachable au moyen d'une liaison de vissage (14, 15).
